# EUROPEAN PATENT SPECIFICATION

(11) **EP 3 264 508 B1**
(45) Date of publication and mention of the grant of the patent: **27.11.2019**
(21) Application number: 17176801.3
(22) Date of filing: 20.06.2017
(51) Int. Cl.: H01M 8/04858, H01M 8/0612, H01M 8/04089, H01M 8/04119, H01M 8/0432, H01M 8/0438

(54) **FUEL CELL SYSTEM AND METHOD FOR OPERATING THE SAME**
BRENNSTOFFZELLENSYSTEM UND VERFAHREN ZUM BETREIBEN DIESES SYSTEMS
SYSTÈME DE PILE À COMBUSTIBLE ET SON PROCÉDÉ DE FONCTIONNEMENT

(30) Priority: 29.06.2016 JP 2016128574
(43) Date of publication of application: 03.01.2018
(73) Proprietor: Panasonic Intellectual Property Management Co., Ltd., Osaka-shi, Osaka 540-6207 (JP)
(72) Inventor: KANI, Yukimune, Osaka-shi, Osaka 540-6207 (JP); UKAI, Kunihiro, Osaka-shi, Osaka 540-6207 (JP); ONUMA, Shigenori, Osaka-shi, Osaka 540-6207 (JP)
(74) Representative: Grünecker Patent- und Rechtsanwälte PartG mbB

(56) References cited:
- EP-A2- 1 262 361
- WO-A1-2015/122097
- GB-A- 2 453 127

## Description

### BACKGROUND

### 1. Technical Field

The present disclosure relates to a fuel cell system including a fuel cell stack in which a proton-conducting electrolyte membrane is used and a method for operating the fuel cell system.

### 2. Description of the Related Art

Fuel cells, which convert chemical energy directly into electric energy by electrochemical reactions, can potentially be of high efficiency in principle because they are not limited by Carnot efficiency. For example, the fuel cell described in Japanese Unexamined Patent Application Publication No. 2004-273343 includes an electrode assembly composed of an electrolyte through which ions can pass, a cathode on one side of the electrolyte, and an anode on the other side of the electrolyte. Fuel cells in general incorporate a membranous electrolyte for lower electric resistance. Fuel cells are categorized into, for example, polymer electrolyte, phosphoric acid, solid-oxide, and molten-carbonate fuel cells according to the electrolyte material..

An example of a known fuel cell system is one described in Journal of the Hydrogen Energy Systems Society of Japan, Vol. 37, No. 2(2012), pp. 120 to 123. In this system, a reformer reforms a raw material to generate a hydrogen-containing gas and feeds the gas to the anode of a fuel cell. The raw material can be, for example, a hydrocarbon fuel, such as natural gas (town gas) or LPG, which are both well-developed components of social infrastructure.

Besides such external-reforming fuel cells, for which the reformer is outside the fuel cell, there are internal-reforming fuel cells, which have a built-in reforming capability. The method of reforming can be, for example, steam reforming or partial oxidation. At an appropriate temperature, a mixture of a hydrocarbon fuel and steam or oxygen added thereto is brought into contact with a reforming catalyst, reacting with the catalyst to give a hydrogen-containing gas.

It is known that carbon deposits under certain conditions in the reforming of a hydrocarbon fuel. For example, when the fuel is methane, carbon deposits in accordance with formula 1. The reaction of formula 2, which is a disproportionation of carbon monoxide resulting from the reforming, can also be a cause of such coking.

CH₄ ↔ C + 2H₂ (1)

2CO ↔ C + CO₂ (2)

For example, as described in A.D. Tevebaugh and E.J. Cairns, Carbon Deposition Boundaries in the CHO System at Several Pressures, J. Chem. Eng. Data, 10, 359-362 (1965), it is possible to assess the potential for coking through a thermodynamic equilibrium calculation with the proportions of carbon, hydrogen, and oxygen and pressure as parameters, and to know coking limits from a C-H-O ternary diagram.

Once carbon deposits in a reformer, the carbon clogs the catalyst layer and destroys the reforming catalyst. The resulting increase in the pressure loss in the reformer is a great hindrance to the operation of the whole system. Coking on the anode of a fuel cell affects the performance of the fuel cell by, for example, interfering with the diffusion of gas in the anode.

Such types of coking become more common with decreasing steam-to-carbon molar ratio (S/C). However, increasing the S/C will affect the efficiency of the fuel cell system because more thermal energy will be needed to generate steam from water. The operation parameters for a fuel cell system are thus set to make the S/C roughly 2.0 to 3.0 for example, taking into account the efficiency of the system and coking.

In a fuel cell in which an oxide ion-conducting electrolyte membrane is used, O²⁻ generated in accordance with formula 3 at the cathode is fed to the anode through the electrolyte and reacts with hydrogen, generating steam (formula 4).

Cathode: O₂ + 4e⁻ → 2O²⁻ (3)

Anode: H₂ + O²⁻ → H₂O + 2e⁻ (4)

In a fuel cell in which a proton-conducting electrolyte membrane is used, H⁺ generated in accordance with formula 5 at the anode are fed to the cathode through the electrolyte, generating steam through the reaction of formula 6.

Anode: H₂ → 2H⁺ + 2e⁻ (5)

Cathode: O₂ + 4H⁺ + 4e → 2H₂O (6)

Fuel cell stacks in which an oxide ion-conductor is used are known to experience an oxidation of the material for the anode due to fuel starvation. Fuel starvation is a state in which fuel is locally depleted as a result of, for example, current distribution. For example, when a Ni anode is used, the Ni is oxidized into NiO as a result of fuel starvation, leading to destruction or reduced performance of the cell. By contrast, fuel cell stacks in which a proton conductor is used offer an advantage in that such an oxidation of the material for the anode due to fuel starvation doesn't occur in principle.

Fuel cell stacks in which a proton-conducting electrolyte is used, however, may suffer from coking in some cases when they are operated without being sufficiently warmed, such as when they are used immediately after the whole system is started up.

### SUMMARY

One non-limiting and exemplary embodiment provides a fuel cell system with reduced coking-related loss of performance. Another such embodiment provides a method for operating this fuel cell system.

The invention is defined in independent claims and further advantageous embodiments are defined in dependent claims.

The fuel cell system according to an aspect of the present disclosure offers the advantage of reduced coking-related loss of performance.

It should be noted that general or specific embodiments may be implemented as a system, a method, an integrated circuit, a computer program, a storage medium, or any selective combination thereof.

These and other objects and the features and advantages of the present disclosure will become apparent from the detailed description of preferred embodiments below with reference to the attached drawings.

### BRIEF DESCRIPTION OF THE DRAWINGS

Fig. 1 is a block diagram schematically illustrating the structure of a fuel cell system according to Embodiment 1 of the present disclosure;
Fig. 2A is a C-H-O ternary diagram illustrating changes in the composition of anode gas for two fuel cells, one in which an oxide ion-conducting electrolyte is used and the other in which a proton-conducting electrolyte is used, with the fuel being methane and S/C = 2.0;
Fig. 2B is a C-H-O ternary diagram illustrating coking regions of the fuel cell system of Fig. 1 with a plot of compositions of anode gas, with the fuel being methane and S/C being 2.0;
Fig. 3 is a block diagram schematically illustrating the structure of a fuel cell system according to Embodiment 2 of the present disclosure;
Fig. 4 is a block diagram schematically illustrating the structure of a fuel cell system according to Embodiment 3 of the present disclosure;
Fig. 5 is a block diagram schematically illustrating the structure of a fuel cell system according to Embodiment 4 of the present disclosure;
Fig. 6 is a block diagram schematically illustrating the structure of a fuel cell system according to Embodiment 5 of the present disclosure;
Fig. 7 is a block diagram schematically illustrating the structure of a fuel cell system according to Embodiment 7 of the present disclosure; and
Fig. 8 is a block diagram schematically illustrating the structure of a fuel cell system according to Embodiment 8 of the present disclosure.

### DETAILED DESCRIPTION

In a first aspect of the present disclosure, a fuel cell system is defined according to claim 1.

This structure limits the carbon deposition in the fuel cell stack by keeping the current output from the fuel cell stack at or below the upper limit. As a result, the coking-related loss of performance is reduced.

In a second aspect of the present disclosure, the fuel cell system according to the first aspect may have a structure in which: the temperature sensor is a first temperature sensor; the fuel cell system further includes an off-gas path, a passage through which off-gas discharged from the anode passes, and a second temperature sensor that senses a temperature of the off-gas; and the controller defines the upper limit of current output from the fuel cell stack on the basis of either the temperature of the fuel cell stack or the temperature of the off-gas, whichever is lower, and the supply of the fuel to keep the current output from the fuel cell stack at or below the upper limit. This leads to reduced coking in the fuel cell stack and the off-gas path and therefore provides a reduction in efficiency losses in fuel cell systems that include a fuel cell stack and an off-gas path.

In a third aspect of the present disclosure, the fuel cell system according to the first aspect may have a structure in which: the fuel cell system further includes a pressure sensor that senses a pressure of anode gas, a gas that contains at least one of the fuel and the hydrogen-containing gas and is fed to the anode; and the controller defines the upper limit of current output from the fuel cell stack on the basis of the temperature of the fuel cell stack, the supply of the fuel, and the pressure of the anode gas and keeps the current output from the fuel cell stack at or below the upper limit.

In a fourth aspect of the present disclosure, the fuel cell system according to the third aspect may have a structure in which: the temperature sensor is a first temperature sensor; the fuel cell system further includes an off-gas path, a passage through which off-gas discharged from the anode passes, and a second temperature sensor that senses a temperature of the off-gas; and the controller defines the upper limit of current output from the fuel cell stack on the basis of either the temperature of the fuel cell stack or the temperature of the off-gas, whichever is lower, the supply of the fuel, and the pressure of the anode gas and keeps the current output from the fuel cell stack at or below the upper limit.

In this arrangement, even if the pressure of the anode gas fed varies or the fuel cell system is operated under pressurized conditions, the current output from the fuel cell stack is limited on the basis of the sensed pressure. Coking in the fuel cell stack is reduced and therefore so is the coking-related loss of the efficiency of the fuel cell stack.

In a fifth aspect of the present disclosure, the fuel cell system according to any of the first to fourth aspects may further include a reformer that reforms the fuel and generates the hydrogen-containing gas.

In a sixth aspect of the present disclosure, the fuel cell system according to any of the first to fifth aspects may be a fuel cell system that gives an external load a supply of power from the fuel cell stack and that has a structure in which the controller increases the supply of the fuel if the controller determines that the supply of power from the fuel cell stack, which is based on predetermined performance characteristics of the fuel cell stack, will fail to meet a power requirement of the external load. This allows the user to match the supply of power to the power requirement of an external load while limiting the carbon deposition.

In a seventh aspect of the present disclosure, the fuel cell system according to any of the first to fifth aspects may further include a water feeder that supplies water to the fuel cell stack and an evaporator that evaporates the water supplied from the water feeder.

In an eighth aspect of the present disclosure, the fuel cell system according to the seventh aspect may be a fuel cell system that gives an external load a supply of power from the fuel cell stack and that has a structure in which the controller increases at least one of the supply of the fuel and a supply of the water if the controller determines that the supply of power from the fuel cell stack, which is based on predetermined performance characteristics of the fuel cell stack, will fail to meet a power requirement of the external load. This allows the user to match the supply of power to the power requirement of an external load while limiting the carbon deposition.

In a ninth aspect of the present disclosure, the fuel cell system according to any of the first to fifth aspects may further include a steam feeder that supplies steam to the fuel cell stack.

In a tenth aspect of the present disclosure, the fuel cell system according to the ninth aspect may be a fuel cell system that gives an external load a supply of power from the fuel cell stack and that has a structure in which the controller increases at least one of the supply of the fuel and a supply of the steam if the controller determines that the supply of power from the fuel cell stack, which is based on predetermined performance characteristics of the fuel cell stack, will fail to meet a power requirement of the external load. This allows the user to match the supply of power to the power requirement of an external load while limiting the carbon deposition.

A method according to a thirteenth aspect of the present disclosure for operating a fuel cell system is a method for operating a fuel cell system as defined in claim 13 that includes a fuel feeder that supplies fuel, a fuel cell stack that generates power through an electrochemical reaction using air and a hydrogen-containing gas generated from the fuel, and a temperature sensor that senses a temperature of the fuel cell stack. The fuel cell stack has a membrane electrode assembly including an electrolyte membrane through which protons can pass, a cathode on a first side of the electrolyte membrane, and an anode on a second side of the electrolyte membrane. The method includes defining an upper limit of current output from the fuel cell stack on the basis of the temperature of the fuel cell stack and a supply of the fuel and keeping the current output from the fuel cell stack at or below the upper limit.

The following describes some embodiments of the present disclosure in specific terms with reference to the drawings. Like or corresponding elements are represented by like numerals throughout and described only once in the following.

### Embodiment 1

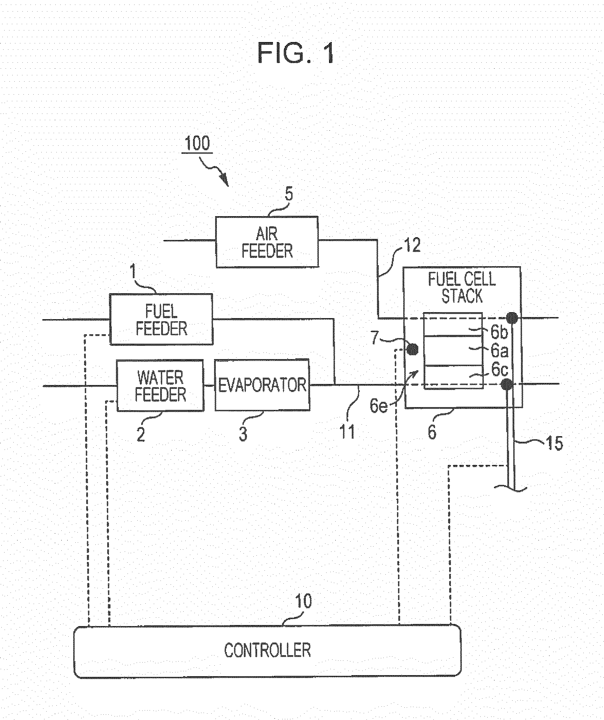

Fig. 1 is a block diagram schematically illustrating the structure of a fuel cell system 100 according to Embodiment 1. The fuel cell system 100 includes a fuel cell stack 6, a first temperature sensor 7, a fuel feeder 1, an air feeder 5, a current-out line 15, and a controller 10. The fuel cell system 100 may optionally further include a water feeder 2 and an evaporator 3.

The fuel cell stack 6 generates power through an electrochemical reaction using a hydrogen-containing gas and air. The fuel cell stack 6 has one or multiple membrane electrode assemblies 6e, each membrane electrode assembly 6e including an electrolyte membrane 6a, a cathode 6b, and an anode 6c. The electrolyte membrane 6a is a membrane through which protons can pass (a proton-conducting membrane), the cathode 6b is on one side of the electrolyte membrane 6a, and the anode 6c is on the other side of the electrolyte membrane 6a.

The anode 6c has a reforming capability, with which the anode 6c reforms the fuel fed thereto and generates a gas that contains hydrogen (a hydrogen-containing gas). The hydrogen become protons at the anode 6c, releasing electrons (formula 5). The protons pass through the electrolyte membrane 6a and react with the electrons and with oxygen in the air at the cathode 6b, generating steam (formula 6).

The first temperature sensor 7 senses the temperature of the fuel cell stack 6 and is provided at a location where it indicates a value that represents the temperature of the fuel cell stack 6. For example, the first temperature sensor 7 is provided in a generator room where the fuel cell stack 6 has been installed, and senses the temperature in the generator room. Alternatively, the first temperature sensor 7 may sense the temperature of the fuel cell stack 6 by, for example, measuring the temperature of a gas flowing through an anode channel of the fuel cell stack 6 (anode gas), measuring the temperature of a separator or such other component of the fuel cell stack 6, measuring the surface temperature of the fuel cell stack 6, measuring the temperature in a generator room where the fuel cell stack 6 has been installed, or measuring the temperature of the outer wall of a generator room where the fuel cell stack 6 has been installed. Preferably, the first temperature sensor 7 senses the temperature of the fuel in the anode 6c of the fuel cell stack 6. The first temperature sensor 7 sends the temperature it has sensed to the controller 10.

The fuel feeder 1 supplies fuel to the fuel cell stack 6. The fuel feeder 1 is connected to a source of fuel (not illustrated) and to the upstream end of the anode 6c of the fuel cell stack 6 via a fuel path and a first feeding path 11 at its upstream and downstream ends, respectively. The source of fuel can be, for example, a fuel cylinder or fuel infrastructure. The fuel is fed to the anode 6c as anode gas. The fuel can be, for example, a hydrocarbon fuel, such as natural gas (manufactured gas) or propane gas. The fuel feeder 1 also regulates the flow rate (supply) of fuel fed to the anode 6c.

The water feeder 2 supplies water to the fuel cell stack 6. The water feeder 2 is connected to a source of water (not illustrated) and to the upstream end of the anode 6c of the fuel cell stack 6 via a water path and the first feeding path 11 at its upstream and downstream ends, respectively. The source of water can be, for example, waterworks. When the source of water is waterworks, it is preferred to the structure of the system includes elimination of ions contained in the water, such as ion-exchange resins. The water feeder 2 also regulates the flow rate (supply) of water fed to the evaporator 3. The evaporator 3, a piece of equipment that evaporates water supplied from the water feeder 2, is provided in the water path.

The fuel and water paths join at their respective downstream ends into the first feeding path 11. Through the first feeding path 11, a mixture of the fuel coming through the fuel path and steam through the water path (anode gas) flows. The anode gas is fed to the anode 6c of the fuel cell stack 6.

The air feeder 5 supplies air to the fuel cell stack 6. The air feeder 5 is connected to a source of air (not illustrate) and to the upstream end of the cathode 6b of the fuel cell stack 6 via a second feeding path 12 at its upstream and downstream ends, respectively. The source of air can be, for example, the atmosphere. The air feeder 5 also regulates the flow rate (supply) of air fed to the cathode 6b. The air is fed to the cathode 6b of the fuel cell stack 6 as cathode gas.

The current-out line 15 is connected to the fuel cell stack 6 and used to take out the current generated by the fuel cell stack 6. The current-out line 15 is also connected to an external load (not illustrated) via, for example, a power converter, such as an inverter.

The controller 10 controls the individual components of the fuel cell system 100. For example, the controller 10 sends signals to the fuel feeder 1, water feeder 2, and air feeder 5 and regulates the supply from each feeder by controlling the characteristics of the signals, such as current pulse and voltage. The controller 10 also defines an upper limit Im of current output I from the fuel cell stack 6 on the basis of the temperature of the fuel cell stack 6 and the supply of the fuel and keeps the current output I from the fuel cell stack 6 at or below the upper limit lm.

The structure of the controller 10 is not critical as long as it has a control capability. For example, the controller 10 may have a processing unit (not illustrated), such as an MPU or CPU, and a memory unit (not illustrated), such as a memory. The memory unit stores information such as basic programs that allow the fuel cell system 100 to work and kinds of fixed data. The processing unit reads and executes the basic and other software programs stored in the memory unit to control the operations of the fuel cell system 100. There may be either one controller 10 for centralized control or multiple controllers 10 that work together for distributed control.

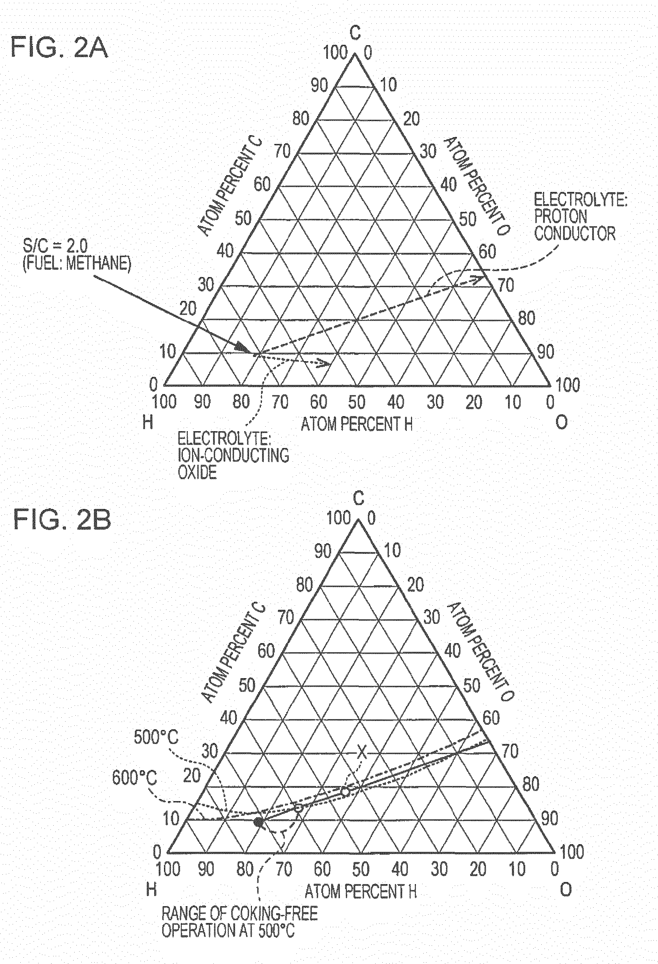

The following describes a method for operating the fuel cell system 100 according to Embodiment 1 with reference to Figs. 2A and 2B. This method is controlled by the controller 10.

Fig. 2A is a C-H-O ternary diagram illustrating changes in the composition of anode gas for two fuel cells, one in which the electrolyte is an oxide ion-conductor and the other in which the electrolyte is a proton conductor, with the fuel being methane and S/C = 2.0. As can be seen from the diagram, when the electrolyte is an oxide ion-conductor, the proportion of oxygen increases with the progress of power generation, and when the electrolyte is a proton conductor, the proportion of hydrogen decreases with the progress of power generation.

Fig. 2B is a C-H-O ternary diagram (C:H:O ratio profile) illustrating carbon deposition regions at 500°C and 600°C with a plot of compositions of anode gas for a fuel cell in which the electrolyte is a proton conductor, with the fuel being methane and S/C being 2. The following describes cases in which the fuel is methane. Cases with other fuels give the same results and are not described.

Specifically, in response to a start-up command, the fuel and air are supplied, and the evaporator 3 and the fuel cell stack 6 are heated by combustion heat coming from a burner (not illustrated) or by a heater (not illustrated). Then water is allowed to flow, a mixture of steam and the fuel is fed to the anode 6c, and electric current is taken out. If the temperature of the fuel cell stack 6 is low during this, carbon may deposit. The current output I from the fuel cell stack 6 is thus limited to prevent carbon deposition.

The controller 10 calculates the flow rates X, Y, and Z of carbon, hydrogen, and oxygen atoms, respectively, in the anode gas on the basis of information about the composition and supply of the fuel and the supply of steam. These flow rates, the temperature of the fuel cell stack 6, and the preset pressure P0 of anode gas are used to determine the critical flow rate YL of hydrogen atoms, below which no coking occurs.

Specifically, the flow rate X of carbon atoms, flow rate Z of oxygen atoms, temperature of the fuel cell stack 6, and pressure P0 of the anode gas are fixed, and the thermodynamic equilibrium of the anode gas is calculated at descending flow rates Y of hydrogen atoms. The lowest flow rate of hydrogen atoms that can be reached without coking is the critical flow rate YL of hydrogen atoms.

The critical flow rate YL of hydrogen atoms may be determined either by performing a fresh thermodynamic equilibrium calculated or by referring to a table that has been prepared beforehand through thermodynamic equilibrium calculated. When the proton conductor is of a kind that becomes conductive to protons by taking in H₂O, the critical flow rate YL of hydrogen atoms may be calculated after reducing the amount of H₂O (two hydrogen atoms and one oxygen atom) that would be required under the given temperature and pressure conditions and subtracting the corresponding hydrogen and oxygen partial pressures from the pressure of the anode gas. However, the influence of H₂O intake is negligible because the proton conductor usually finishes taking in H₂O before the fuel cell stack 6 is ready to operate.

Then the controller 10 determines an upper limit Im of current output I from the fuel cell stack 6 from the difference between the flow rate Y of hydrogen atoms and the lowest flow rate YL of hydrogen atoms that can be reached without coking (critical flow rate of hydrogen atoms), which is the maximum supply of hydrogen atoms to power generation that can be reached without coking.

Alternatively, it is also possible to find flow rates of carbon, hydrogen, and oxygen atoms at which carbon does not deposit (critical flow rates) by using Fig. 2B or any such chart. In Fig. 2B, the solid line represents relative flow rates (%) of carbon, hydrogen, and oxygen atoms in anode gas (compositions of anode gas) for a fuel cell stack 6 at a given S/C (e.g., 2.0) and a given pressure. The dotted line is a line that represents compositions of anode gas at which coking starts at 500°C at the given pressure (boundary), and the dot and chain line a boundary at 600°C. Thermodynamically speaking, carbon deposit in the regions above these lines (the side of higher proportions of carbon atoms) (carbon deposition regions).

For example, an anode gas having the composition indicated by point X on the solid line in Fig. 2B is above the boundary at 500°C. With this anode gas, carbon deposits when the temperature of the fuel cell stack 6 is 500°C or less. By changing the composition of the anode gas along the solid line toward higher proportions of hydrogen to a point below the boundary at 500°C, coking can be avoided. At 600°C, carbon does not deposit.

In this way, flow rates of carbon, hydrogen, and oxygen atoms at which carbon does not deposit (critical flow rates) are determined from an available temperature profile of critical C:H:O ratios for coking and the temperature of the fuel cell stack 6. The C:H:O ratio profile has been determined beforehand through, for example, thermodynamic equilibrium calculation from the given S/C, pressure of the anode gas, and composition of the fuel as illustrated in Fig. 2A. The temperature of the fuel cell stack 6 is sensed by the first temperature sensor 7.

Then the controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit lm of current output I from the fuel cell stack 6.

The controller 10 keeps the current output I from the fuel cell stack 6 at or below the upper limit lm by, for example, controlling a power converter or any such component to which the current-out line 15 is connected. This limits the carbon deposition in the anode 6c, thereby reducing the loss of performance of the fuel cell stack 6.

The upper limit Im of current output I may be multiplied by a predetermined safety factor to give another upper limit of current output at or below which the current output I from the fuel cell stack 6 may be kept.

### Embodiment 2

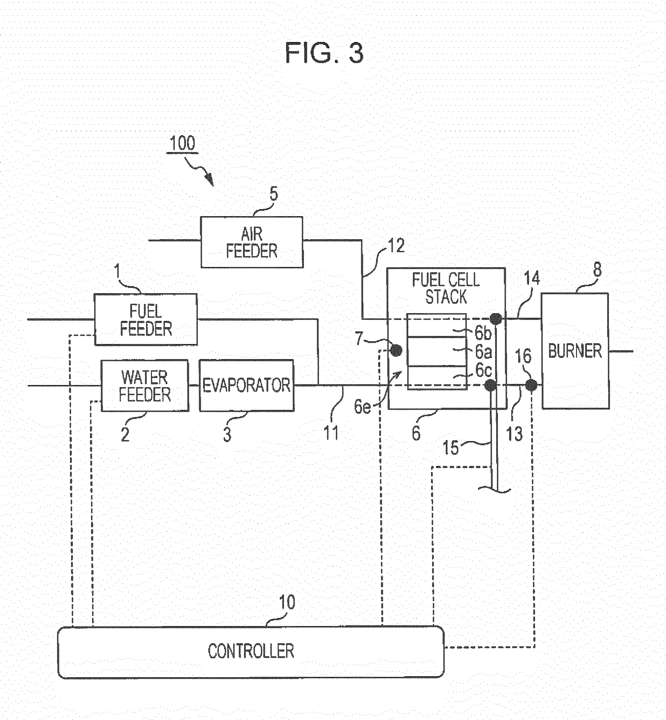

Fig. 3 is a block diagram schematically illustrating the structure of a fuel cell system 100 according to Embodiment 2. This fuel cell system 100 includes a first off-gas path 13 and a second temperature sensor 16 in addition to the components of the fuel cell system 100 according to Embodiment 1. The fuel cell system 100 may further include a burner 8 and a second off-gas path 14.

The burner 8 is connected to the downstream end of the anode 6c by the first off-gas path 13 and to the downstream end of the cathode 6b by the second off-gas path 14. As a result, the gas discharged from the anode 6c (anode off-gas) and the gas discharged from the cathode 6b (cathode off-gas) are fed to the burner 8.

The anode off-gas contains hydrogen, steam, carbon dioxide, carbon monoxide, unreformed fuel, and so forth. The cathode off-gas contains, for example, oxygen not used while the fuel cell stack 6 generates power. The burner 8 burns combustible gases with oxygen and discharges a gas (combustion gas). The resulting combustion heat and/or the heat of the combustion gas is used to heat the evaporator 3 and the fuel cell stack 6.

The second temperature sensor 16 senses the temperature of the anode off-gas. Provided in the first off-gas path 13, the second temperature sensor 16 senses the temperature of the anode off-gas and sends it to the controller 10. For example, the second temperature sensor 16 may directly measure the temperature of the off-gas or measure the temperature of any component that represents the temperature of the off-gas, such as the temperature of off-gas piping. Preferably, the second temperature sensor 16 senses the lowest temperature in the first off-gas path 13. If the second temperature sensor 16 is not positioned to sense the lowest temperature in the first off-gas path 13, knowing the correlation in advance gives the same result as sensing the lowest temperature.

The controller 10 defines an upper limit Im of current output I from the fuel cell stack 6 on the basis of either the temperature of the fuel cell stack 6 or that of the anode off-gas, whichever is lower, and the supply of the fuel and keeps the current output I from the fuel cell stack 6 at or below the upper limit Im.

A more specific description is as follows. Not only the anode gas, but also the anode off-gas contains the fuel and other hydrocarbons and carbon monoxide. Thus, when the temperature of the anode off-gas, in the first off-gas path 13, is low due to heat radiation or other causes, carbon can deposit in the first off-gas path 13, too. The controller 10 therefore determines the temperature of the anode off-gas from the value given by the second temperature sensor 16, as well as determining the temperature of the fuel cell stack 6 from the value given by the first temperature sensor 7. Since coking is more likely to occur with lower temperatures, the lower one of the temperatures of the fuel cell stack 6 and anode off-gas is determined.

The controller 10 calculates the flow rates X, Y, and Z of carbon, hydrogen, and oxygen atoms, respectively, in the anode gas on the basis of information about the composition and supply of the fuel and the supply of steam. These flow rates, the lower one of the temperatures of the fuel cell stack 6 and anode off-gas, and the preset pressure P0 of anode gas are used to determine the critical flow rate YL of hydrogen atoms, below which no coking occurs. The critical flow rate YL of hydrogen atoms may otherwise be determined from, for example, the lowest flow rate of hydrogen atoms at either the temperature of the fuel cell stack 6 or that of the anode off-gas, whichever is lower, through thermodynamic equilibrium calculation. Alternatively, it is possible to find the critical flow rate YL of hydrogen atoms on the basis of an available profile of critical C:H:O ratios for coking and the lower one of the temperatures of the fuel cell stack 6 and anode off-gas by using Fig. 2B or any such chart.

The controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit Im of current output I from the fuel cell stack 6.

The controller 10 then keeps the current output I from the fuel cell stack 6 at or below the upper limit lm by, for example, controlling a power converter or any such component to which the current-out line 15 is connected. This limits the carbon deposition in the anode 6c and first off-gas path 13, thereby reducing the loss of performance of the fuel cell stack 6.

### Embodiment 3

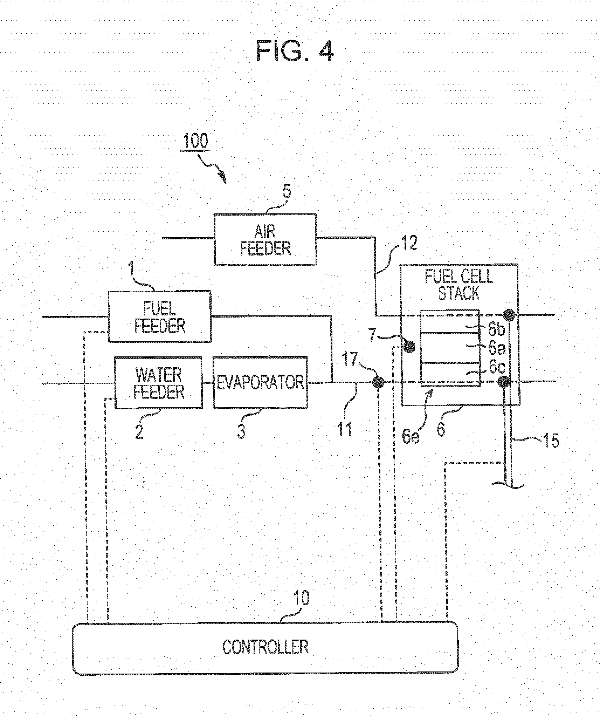

Fig. 4 is a block diagram schematically illustrating the structure of a fuel cell system 100 according to Embodiment 3. This fuel cell system 100 includes a pressure sensor 17 in addition to the components of the fuel cell system 100 according to Embodiment 1.

The pressure sensor 17 senses the pressure of the gas fed to the anode 6c (anode gas). Provided in the first feeding path 11, the pressure sensor 17 senses the pressure of the anode gas while it flows through the first feeding path 11. The pressure sensor 17 sends the pressure it has sensed to the controller 10.

The pressurizing unit is, for example, a compressor. As an example of a possible form of the pressurizing unit, the fuel feeder 1 may have a built-in capability to pressurize the anode gas. Alternatively, the air feeder 5 may have a built-in capability to pressurize the cathode gas.

As described in, for example, Tevebaugh and Cairns, the coking region in a C:H:O ratio profile changes with pressure. The controller 10 thus defines an upper limit lm of current output I from the fuel cell stack 6 on the basis of the temperature of the fuel cell stack 6, the supply of the fuel, and the pressure of the anode gas and keeps the current output I from the fuel cell stack 6 at or below the upper limit Im.

Specifically, the controller 10 calculates the flow rates X, Y, and Z of carbon, hydrogen, and oxygen atoms, respectively, in the anode gas on the basis of information about the composition and supply of the fuel and the supply of steam. These flow rates, the temperature of the fuel cell stack 6, and the pressure P of anode gas sensed by the pressure sensor 17 are used to determine the critical flow rate YL of hydrogen atoms, below which no coking occurs. The critical flow rate YL of hydrogen atoms may otherwise be determined from, for example, the lowest flow rate of hydrogen atoms at the pressure P of anode gas sensed by the pressure sensor 17 through thermodynamic equilibrium calculation. Alternatively, it is possible to find the critical flow rate YL of hydrogen atoms on the basis of an available pressure profile of critical C:H:O ratios for coking according to the pressure of anode gas sensed by the pressure sensor 17 and the temperature of the fuel cell stack 6 by using Fig. 2B or any such chart.

The controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit lm of current output I from the fuel cell stack 6.

The controller 10 then keeps the current output I from the fuel cell stack 6 at or below the upper limit lm by, for example, controlling a power converter or any such component to which the current-out line 15 is connected. This limits the carbon deposition in the anode 6c, thereby reducing the loss of performance of the fuel cell stack 6.

### Embodiment 4

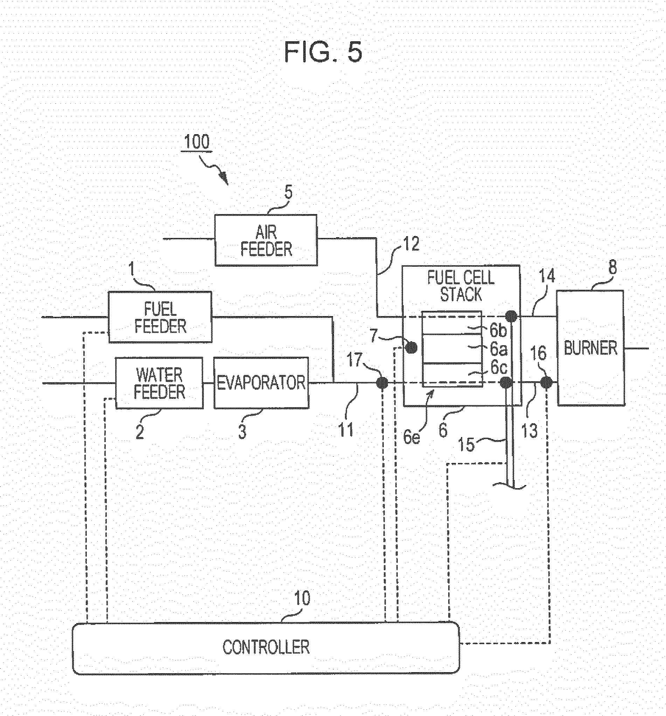

Fig. 5 is a block diagram schematically illustrating the structure of a fuel cell system 100 according to Embodiment 4. This fuel cell system 100 includes a first off-gas path 13 and a second temperature sensor 16 in addition to the components of the fuel cell system 100 according to Embodiment 3. The fuel cell system 100 may further include a burner 8 and a second off-gas path 14. These components are equivalent to those in the fuel cell system 100 according to Embodiment 2 and their details are not repeated.

The controller 10 defines an upper limit Im of current output I from the fuel cell stack 6 on the basis of either the temperature of the fuel cell stack 6 or that of the anode off-gas, whichever is lower, the supply of the fuel, and the pressure of the anode gas and keeps the current output I from the fuel cell stack 6 at or below the upper limit Im.

Specifically, the controller 10 calculates the flow rates X, Y, and Z of carbon, hydrogen, and oxygen atoms, respectively, in the anode gas on the basis of information about the composition and supply of the fuel and the supply of steam. These flow rates, the lower one of the temperatures of the fuel cell stack 6 and anode off-gas, and the pressure P of anode gas sensed by the pressure sensor 17 are used to determine the critical flow rate YL of hydrogen atoms, below which no coking occurs. The critical flow rate YL of hydrogen atoms may otherwise be determined from, for example, the lowest flow rate of hydrogen atoms at the pressure P of anode gas sensed by the pressure sensor 17 and at either the temperature of the fuel cell stack 6 or that of the anode off-gas, whichever is lower, through thermodynamic equilibrium calculation. Alternatively, it is possible to find the critical flow rate YL of hydrogen atoms on the basis of an available pressure profile of critical C:H:O ratios for coking according to the pressure of anode gas sensed by the pressure sensor 17 and the lower one of the temperatures of the fuel cell stack 6 and anode off-gas by using Fig. 2B or any such chart.

The controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit Im of current output I from the fuel cell stack 6.

The controller 10 then keeps the current output I from the fuel cell stack 6 at or below the upper limit lm by, for example, controlling a power converter or any such component to which the current-out line 15 is connected. This limits the carbon deposition in the anode 6c and first off-gas path 13, thereby reducing the loss of performance of the fuel cell stack 6.

### Embodiment 5

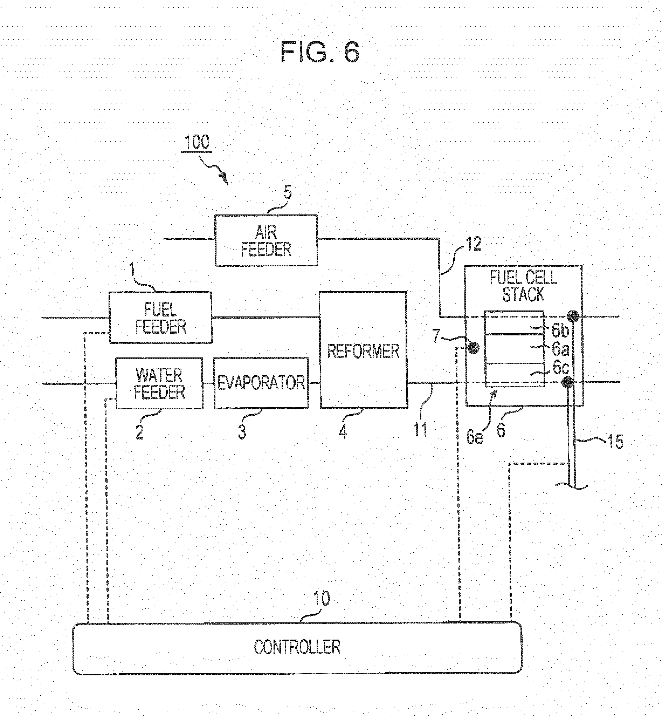

Fig. 6 is a block diagram schematically illustrating the structure of a fuel cell system 100 according to Embodiment 5. This fuel cell system 100 includes a reformer 4 in addition to the components of the fuel cell system 100 according to Embodiment 1. Whereas the fuel cell stack 6 according to Embodiment 1 is an internal-reforming one, which has a built-in reforming capability, the fuel cell stack 6 according to Embodiment 5 is an external-reforming one, which has no built-in reforming capability and has an external reformer 4 instead. However, the fuel cell stack 6 may have a built-in reforming capability in addition to the reformer 4.

The reformer 4 is connected to the fuel feeder 1 by the fuel path, to the evaporator 3 by the water path, and to the anode 6c of the fuel cell stack 6 by the first feeding path 11. The fuel feeder 1 and the evaporator 3 supply the fuel and steam, respectively, to the reformer 4. In the reformer 4 there is a Ru-based reforming catalyst, and the steam reforms the fuel in the presence of the reforming catalyst. The resulting hydrogen-containing gas is supplied to the anode 6c.

Examples of reforming reactions that can be used include steam reforming, partial oxidation, and autothermal reforming, which is a combination of steam reforming and partial oxidation. The equipment for the reforming reaction selected is provided as necessary. For example, if the reforming reaction involves partial oxidation and autothermal reforming, an oxidizer gas feeder is connected to the reformer 4.

The fuel cell systems 100 according to Embodiments 2 to 4 can also have a reformer 4. The structure, operation, and advantages of fuel cell systems 100 according to Embodiments 2 to 4 with a reformer 4 are similar to those without it and are not described. In such a case, the anode gas is supplied to the anode 6c with at least one of the fuel and the hydrogen-containing gas therein.

### Embodiment 6

A fuel cell system 100 according to Embodiment 6 has the same components as the fuel cell system 100 according to Embodiment 1, illustrated in Fig. 1. The controller 10 increases the supply of at least one of the fuel and water if it determines that the supply of power from the fuel cell stack 6 based on predetermined performance characteristics of the fuel cell stack 6 will fail to meet the power requirement of the external load. The current output profile, which is one of the performance characteristics, of the fuel cell stack 6 has been established beforehand through, for example, an experiment.

Specifically, the controller 10 calculates the flow rates X, Y, and Z of carbon, hydrogen, and oxygen atoms, respectively, in the anode gas on the basis of information about the composition and supply of the fuel and the supply of steam. These flow rates, the temperature of the fuel cell stack 6, and the preset pressure P0 of anode gas are used to determine the critical flow rate YL of hydrogen atoms, below which no coking occurs. The critical flow rate YL of hydrogen atoms may otherwise be determined from, for example, the lowest flow rate of hydrogen atoms through thermodynamic equilibrium calculation. Alternatively, it is possible to find the critical flow rate YL of hydrogen atoms on the basis of an available profile of critical C:H:O ratios for coking and the temperature of the fuel cell stack 6 using Fig. 2B or any such chart.

The controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit Im of current output I from the fuel cell stack 6.

The controller 10 then keeps the current output I from the fuel cell stack 6 at or below the upper limit Im by, for example, controlling a power converter or any such component to which the current-out line 15 is connected. This limits the carbon deposition in the anode 6c. With this current output I, the supply of power from the fuel cell stack 6 may fail to meet the power requirement of the external load in some cases.

Thus, the controller 10 acquires the power requirement of the external load from the external load itself or a power converter or any such component. Then the controller 10 determines the amount of power the fuel cell stack 6 should supply from the upper limit lm of current output on the basis of the current output profile, which has been established beforehand. If the determined supply of power from the fuel cell stack 6 is smaller than the power requirement of the external load, the controller 10 determines that the supply of power will fail to meet the power requirement.

In this situation, the controller 10 increases the supply of the fuel and/or water to increase the supply of power. The increase in the supply of at least one of the fuel and water leads to an increase in the supply of power from the fuel cell stack 6. As a result, the supply of power from the fuel cell system 100 is matched to the amount of power the external load requires.

The current output profile that is used may be one that considers the aging of the fuel cell, such as the duration of power generation, total amount of power generated, and duration of operation.

In the fuel cell systems 100 according to Embodiments 2 to 5, too, the controller 10 can work as in Embodiment 6. The operation and advantages of fuel cell systems 100 according to Embodiments 2 to 5 in which the controller 10 works as above are similar to those in Embodiment 6 and are not described.

### Embodiment 7

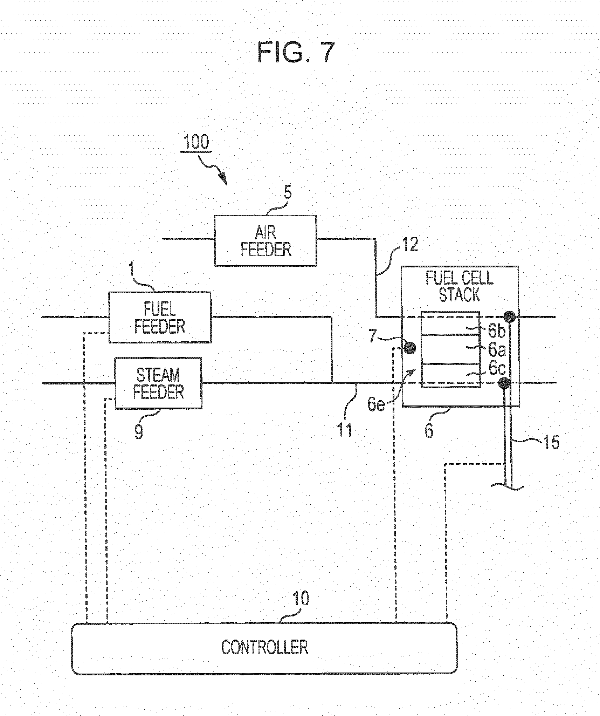

Fig. 7 is a block diagram schematically illustrating the structure of a fuel cell system 100 according to Embodiment 7. This fuel cell system 100 includes a steam feeder 9 instead of the water feeder 2 and evaporator 3 of the fuel cell system 100 according to Embodiment 1.

The steam feeder 9 supplies steam to the fuel cell stack 6. The steam feeder 9 is connected to a source of steam (not illustrated) and to the upstream end of the anode 6c of the fuel cell stack 6 via a water path and the first feeding path 11 at its upstream and downstream ends, respectively. The steam feeder 9 regulates the flow rate (supply) of steam fed to the anode 6c.

The controller 10 increases the supply of the fuel and/or steam if it determines that the supply of power from the fuel cell stack 6 based on predetermined performance characteristics of the fuel cell stack 6 will fail to meet the power requirement of the external load.

The fuel cell system 100 according to Embodiment 7 controls the steam feeder 9 to increase the supply of steam instead of controlling the water feeder 2 to increase the supply of water. The resulting operation and advantages are similar to those of Embodiment 6 and are not described.

The fuel cell systems 100 according to Embodiment 2 to 6 can also have a steam feeder 9 instead of the water feeder 2 and evaporator 3. The operation and advantages of fuel cell systems 100 according to Embodiments 2 to 6 with a steam feeder 9 are similar to those in Embodiment 7 and are not described.

### Embodiment 8

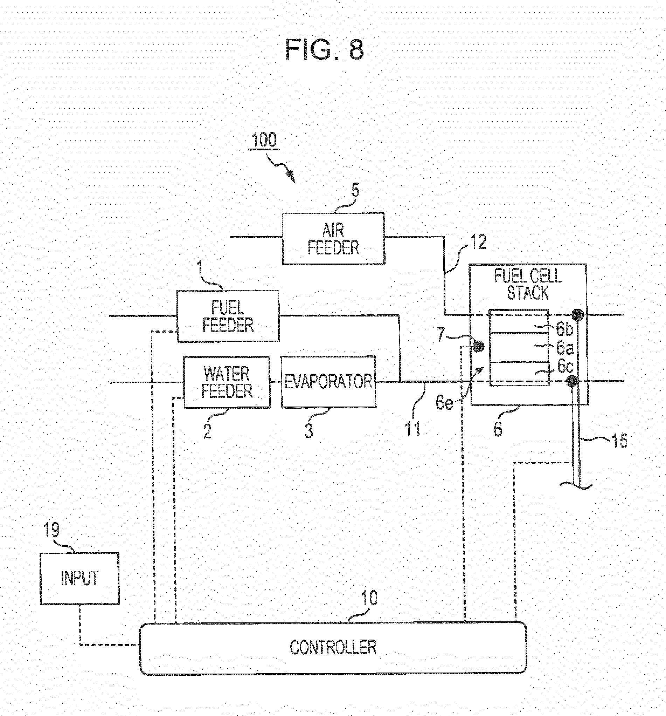

Fig. 8 is a block diagram schematically illustrating the structure of a fuel cell system 100 according to Embodiment 8. This fuel cell system 100 includes an input 19 in addition to the components of the fuel cell system 100 according to Embodiment 1.

The input 19 is a unit used to input the composition of the fuel. By the user's operation of the input 19 or a communication means the input 19 has, the composition of the fuel is input to the controller via the input 19.

The controller 10 defines an upper limit Im of current output I from the fuel cell stack 6 on the basis of the temperature of the fuel cell stack 6, the supply of the fuel, and the composition of the fuel and keeps the current output I from the fuel cell stack 6 at or below the upper limit Im.

The controller 10 calculates the flow rates X, Y, and Z of carbon, hydrogen, and oxygen atoms, respectively, in the anode gas on the basis of the input composition of the fuel and information about the supply of the fuel and steam. These flow rates, the lower one of the temperatures of the fuel cell stack 6 and anode off-gas, and the preset pressure P0 of anode gas are used to determine the critical flow rate YL of hydrogen atoms, below which no coking occurs. The critical flow rate YL of hydrogen atoms may otherwise be determined from, for example, the lowest flow rate of hydrogen atoms at either the temperature of the fuel cell stack 6 or that of the anode off-gas, whichever is lower, through thermodynamic equilibrium calculation. Alternatively, it is possible to find the critical flow rate YL of hydrogen atoms on the basis of an available profile of critical C:H:O ratios for coking and the lower one of the temperatures of the fuel cell stack 6 and anode off-gas by using Fig. 2B or any such chart.

The controller 10 calculates, by subtracting the critical flow rate YL of hydrogen atoms from the flow rate Y of hydrogen atoms, the maximum supply of hydrogen atoms to power generation that can be reached without coking. From this maximum supply of hydrogen atoms, the controller 10 determines an upper limit Im of current output I from the fuel cell stack 6.

The controller 10 then keeps the current output I from the fuel cell stack 6 at or below the upper limit Im by, for example, controlling a power converter or any such component to which the current-out line 15 is connected. This limits the carbon deposition in the anode 6c, thereby reducing the loss of performance of the fuel cell stack 6.

The fuel cell systems 100 according to Embodiments 2 to 7 can also have an input 19. The structure, operation, and advantages of fuel cell systems 100 according to Embodiments 2 to 7 with an input 19 are similar to those in Embodiment 8 and are not described.

From the foregoing description, many improvements to and other embodiments of the present disclosure are apparent to those skilled in the art. The foregoing description should therefore be construed only as an illustration and is provided in order to teach those skilled in the art the best mode of carrying out the present disclosure. The details of the structures and/or functions set forth herein can be substantially changed without departing from the scope of the present disclosure as claimed.

Fuel cell systems and methods for operating them according to the present disclosure are useful as, for example, fuel cell systems with reduced coking-related loss of performance and methods for operating them.

## Claims

1. A fuel cell system comprising:
a fuel feeder (1) configured to supply hydrocarbon fuel;
a fuel cell stack (6) configured to generate power through an electrochemical reaction using air and a hydrogen-containing gas generated from the hydrocarbon fuel;
a temperature sensor (7) configured to sense a temperature of the fuel cell stack (6); and
a controller (10), wherein:
the fuel cell stack (6) has a membrane electrode assembly (6e) including an electrolyte membrane (6a) through which protons can pass, a cathode (6b) on a first side of the electrolyte membrane (6a), and an anode (6c) having a reforming capability on a second side of the electrolyte membrane (6a); and
the controller (10) is configured to define an upper limit of current output from the fuel cell stack (6) and keep the current output from the fuel cell stack (6) at or below the upper limit,
the upper limit of current output from the fuel cell stack (6) is defined on the basis of the temperature of the fuel cell stack (6) and flow rate of the hydrocarbon fuel.

2. The fuel cell system according to Claim 1, wherein:
the temperature sensor is a first temperature sensor (7);
the fuel cell system further includes an off-gas path (13), a passage through which off-gas discharged from the anode (6c) passes; and
a second temperature sensor (16) configured to sense a temperature of the off-gas; and
the controller (10) is configured to define the upper limit of current output from the fuel cell stack (6) on the basis of either the temperature of the fuel cell stack (6) or the temperature of the off-gas, whichever is lower, and the flow rate of the hydrocarbon fuel and keep the current output from the fuel cell stack (6) at or below the upper limit.

3. The fuel cell system according to Claim 1, further comprising
a pressure sensor (17) configured to sense a pressure of anode gas, a gas that contains at least one of the fuel and the hydrogen-containing gas and is fed to the anode (6c), wherein
the controller (10) is configured to define the upper limit of current output from the fuel cell stack (6) on the basis of the temperature of the fuel cell stack (6), the flow rate of the hydrocarbon fuel, and the pressure of the anode gas and keep the current output from the fuel cell stack (6) at or below the upper limit.

4. The fuel cell system according to Claim 3, wherein:
the temperature sensor is a first temperature sensor (7);
the fuel cell system further includes an off-gas path (13), a passage through which off-gas discharged from the anode (6c) passes; and
a second temperature sensor (16) configured to sense a temperature of the off-gas; and
the controller (10) is configured to define the upper limit of current output from the fuel cell stack (6) on the basis of either the temperature of the fuel cell stack (6) or the temperature of the off-gas, whichever is lower, the flow rate of the hydrocarbon fuel, and the pressure of the anode gas and keep the current output from the fuel cell stack (6) at or below the upper limit.

5. The fuel cell system according to Claim 1, further comprising a reformer (4) configured to reform the fuel and generate the hydrogen-containing gas.

6. The fuel cell system according to Claim 1, wherein:
the fuel cell system is one that gives an external load a supply of power from the fuel cell stack (6); and
the controller (10) is configured to increase the flow rate of the hydrocarbon fuel if the controller (10) determines that the supply of power from the fuel cell stack (6), which is based on predetermined performance characteristics of the fuel cell stack (6), will fail to meet a power requirement of the external load.

7. The fuel cell system according to Claim 1, further comprising:
a water feeder (2) configured to supply water to the fuel cell stack (6); and
an evaporator (3) configured to evaporate the water supplied from the water feeder (2).

8. The fuel cell system according to Claim 7, wherein:
the fuel cell system is one that gives an external load a supply of power from the fuel cell stack (6); and
the controller (10) is configured to increase at least one of the flow rate of the hydrocarbon fuel and a supply of the water if the controller (10) determines that the supply of power from the fuel cell stack (6), which is based on predetermined performance characteristics of the fuel cell stack (6), will fail to meet a power requirement of the external load.

9. The fuel cell system according to Claim 1, further comprising a steam feeder (9) configured to supply steam to the fuel cell stack (6).

10. The fuel cell system according to Claim 9, wherein:
the fuel cell system is one that gives an external load a supply of power from the fuel cell stack (6); and
the controller (10) is configured to increase at least one of the flow rate of the hydrocarbon fuel and a supply of the steam if the controller (10) determines that the supply of power from the fuel cell stack (6), which is based on predetermined performance characteristics of the fuel cell stack (6), will fail to meet a power requirement of the external load.

11. The fuel cell system according to Claim 1, further comprising:
a water feeder (2) configured to supply water to the fuel cell stack (6);
an evaporator (3) configured to evaporate the water supplied from the water feeder (2) ; and
a reformer (4) configured to reform the fuel and steam supplied from the evaporator (3), and generate the hydrogen-containing gas,
wherein the upper limit of current output from the fuel cell stack (6) is defined on the basis of the temperature of the fuel cell stack (6), the flow rate of the hydrocarbon fuel, and the flow rate of the steam.

12. The fuel cell system according to Claim 1, wherein the hydrocarbon fuel is one of natural gas and propane gas.

13. A method for operating a fuel cell system that includes:
a fuel feeder (1) configured to supply hydrocarbon fuel;
a fuel cell stack (6) configured to generate power through an electrochemical reaction using air and a hydrogen-containing gas generated from the hydrocarbon fuel; and
a temperature sensor (7) configured to sense a temperature of the fuel cell stack (6),
the fuel cell stack (6) having a membrane electrode assembly (6e) including an electrolyte membrane (6a) through which protons can pass, a cathode (6b) on a first side of the electrolyte membrane (6a), and an anode (6c) having a reforming capability on a second side of the electrolyte membrane (6a), the method comprising
defining an upper limit of current output from the fuel cell stack (6) and keeping the current output from the fuel cell stack (6) at or below the upper limit,
the upper limit of current output from the fuel cell stack (6) is defined on the basis of the temperature of the fuel cell stack (6) and flow rate of the hydrocarbon fuel.

## Patentansprüche

1. Brennstoffzellensystem, mit:
einer Brennstoffzuführeinheit (1), die ausgebildet ist, Kohlenwasserstoffbrennstoff zuzuführen;
einem Brennstoffzellenstapel (6), der ausgebildet ist, durch eine elektrochemische Reaktion unter Verwendung von Luft und Wasserstoff enthaltendem Gas, das aus dem Kohlenwasserstoffbrennstoff erzeugt ist, Leistung zu erzeugen;
einem Temperatursensor (7), der ausgebildet ist, eine Temperatur des Brennstoffzellenstapels (6) zu erfassen; und
einer Steuerung (10), wobei:
der Brennstoffzellenstapel (6) eine Membranelektrodenanordnung (6e), die eine Elektrolytmembran (6a), durch welche Protonen durchtreten können, eine Kathode (6b) auf einer ersten Seite der Elektrolytmembran (6a) und eine Anode (6c) mit Reformierungsfähigkeit auf einer zweiten Seite der Elektrolytmembran (6a) aufweist; und
die Steuerung (10) ausgebildet ist, eine obere Grenze eines von dem Brennstoffzellenstapel (6) ausgegebenen Stroms festzulegen und den aus dem Brennstoffzellenstapel (6) ausgegebenen Strom an oder unter der oberen Grenze zu halten, wobei
die obere Grenze eines von dem Brennstoffzellenstapel (6) ausgegebenen Stroms auf der Grundlage der Temperatur des Brennstoffzellenstapels (6) und einer Durchflussrate des Kohlenwasserstoffbrennstoffs festgelegt ist.

2. Brennstoffzellensystem nach Anspruch 1, wobei:
der Temperatursensor ein erster Temperatursensor (7) ist;
das Brennstoffzellensystem ferner einen Austrittsgaskanal (13), eine Durchgangsleitung, durch welche Austrittsgas, das aus der Anode (6c) abgeführt wird, durchgeleitet wird; und
einen zweiten Temperatursensor (16) aufweist, der ausgebildet ist, eine Temperatur des Austrittsgases zu erfassen; und
die Steuerung (10) ausgebildet ist, die obere Grenze eines von dem Brennstoffzellenstapel (6) ausgegebenen Stroms auf der Grundlage der Temperatur des Brennstoffzellenstapels (6) oder der Temperatur des Austrittsgases, je nachdem, welche niedriger ist, und der Durchflussrate des Kohlenwasserstoffbrennstoffs festzulegen und den von dem Brennstoffzellenstapel (6) ausgegebenen Strom an oder unter der oberen Grenze zu halten.

3. Brennstoffzellensystem nach Anspruch 1, das ferner aufweist:
einen Drucksensor (17), der ausgebildet ist, einen Druck eines Anodengases zu erfassen, das ein Gas ist, das den Brennstoff und/oder das Wasserstoff enthaltende Gas enthält und der Anode (6c) zugeführt wird, wobei
die Steuerung (10) ausgebildet ist, die obere Grenze eines von dem Brennstoffzellenstapel (6) ausgegebenen Stroms auf der Grundlage der Temperatur des Brennstoffzellenstapels (6), der Durchflussrate des Kohlenwasserstoffbrennstoffs und des Drucks des Anodengases festzulegen und den aus dem Brennstoffzellenstapel (6) ausgegebenen Strom an oder unter der oberen Grenze zu halten.

4. Brennstoffzellensystem nach Anspruch 3, wobei:
der Temperatursensor ein erster Temperatursensor (7) ist;
das Brennstoffzellensystem ferner einen Austrittsgaskanal (13), eine Durchgangsleitung, durch welche Austrittsgas durchgeführt wird, das aus der Anode (6c) abgeführt wird;
und einen zweiten Temperatursensor (16) aufweist, der ausgebildet ist, eine Temperatur des Austrittsgases zu erfassen; und
die Steuerung (10) ausgebildet ist, die obere Grenze eines von dem Brennstoffzellenstapel (6) ausgegebenen Stroms auf der Grundlage der Temperatur des Brennstoffzellenstapels (6) oder der Temperatur des Austrittsgases, je nachdem, welche niedriger ist, der Durchflussrate des Kohlenwasserstoffbrennstoffs und des Drucks des Anodengases festzulegen und den aus dem Brennstoffzellenstapel (6) ausgegebenen Strom an oder unter der oberen Grenze zu halten.

5. Brennstoffzellensystem nach Anspruch 1, das ferner einen Reformer (4) aufweist, der ausgebildet ist, den Brennstoff zu reformieren und das Wasserstoff enthaltende Gas zu erzeugen.

6. Brennstoffzellensystem nach Anspruch 1, wobei:
das Brennstoffzellensystem ein System ist, das Leistung aus dem Brennstoffzellenstapel (6) einem externen Verbraucher zuführt; und
die Steuerung (10) ausgebildet ist, die Durchflussrate des Kohlenwasserstoffbrennstoffs zu erhöhen, wenn die Steuerung (10) erkennt, dass die Leistungszufuhr aus dem Brennstoffzellenstapel (6), die auf vorbestimmten Leistungseigenschaften des Brennstoffzellenstapels (6) beruht, eine Leistungsanforderung des externen Verbrauchers nicht erfüllen wird.

7. Brennstoffzellensystem nach Anspruch 1, das ferner aufweist:
eine Wasserzuführeinheit (2), die ausgebildet ist, dem Brennstoffzellenstapel (6) Wasser zuzuführen; und
eine Verdampfereinheit (3), die ausgebildet ist, das aus der Wasserzuführeinheit (2) zugeführte Wasser zu verdampfen.

8. Brennstoffzellensystem nach Anspruch 7, wobei:
das Brennstoffzellensystem ein System ist, das einem externen Verbraucher Leistung aus dem Brennstoffzellenstapel zuführt; und
die Steuerung (10) ausgebildet ist, die Durchflussrate des Kohlenwasserstoffbrennstoffs und/oder die Zufuhr des Wassers zu erhöhen, wenn die Steuerung (10) erkennt, dass die Leistungszufuhr aus dem Brennstoffzellenstapel (6), die auf vorbestimmten Leistungseigenschaften des Brennstoffzellenstapels (6) beruht, eine Leistungsanforderung des externen Verbrauchers nicht erfüllen wird.

9. Brennstoffzellensystem nach Anspruch 1, das ferner eine Dampfzuführeinheit (9) aufweist, die ausgebildet ist, dem Brennstoffzellenstapel (6) Dampf zuzuführen.

10. Brennstoffzellensystem nach Anspruch 9, wobei:
das Brennstoffzellensystem ein System ist, das einem externen Verbraucher Leistung aus dem Brennstoffzellenstapel (6) zuführt; und
die Steuerung (10) ausgebildet ist, die Durchflussrate des Kohlenwasserstoffbrennstoffs und/oder eine Zufuhr des Dampfes zu erhöhen, wenn die Steuerung (10) erkennt, dass die Zufuhr von Leistung aus dem Brennstoffzellenstapel (6), die auf vorbestimmten Leistungseigenschaften des Brennstoffzellenstapels (6) beruht, eine Leistungsanforderung des externen Verbrauchers nicht erfüllen wird.

11. Brennstoffzellensystem nach Anspruch 1, das ferner aufweist:
eine Wasserzuführeinheit (2), die ausgebildet ist, dem Brennstoffzellenstapel (6) Wasser zuzuführen;
einen Verdampfer (3), die ausgebildet ist, das aus der Wasserzuführeinheit (2) zugeführte Wasser zu verdampfen; und
einen Reformer (4), der ausgebildet ist, den Brennstoff und den aus der Verdampfereinheit (3) zugeführten Dampf zu reformieren und das Wasserstoff enthaltende Gas zu erzeugen,
wobei die obere Grenze eines von dem Brennstoffzellenstapel (6) ausgegebenen Stroms auf der Grundlage der Temperatur des Brennstoffzellenstapels (6), der Durchflussrate des Kohlenwasserstoffbrennstoffs und der Durchflussrate des Dampfes festgelegt ist.

12. Brennstoffzellensystem nach Anspruch 1, wobei der Kohlenwasserstoffbrennstoff Naturgas oder Propangas ist.

13. Verfahren zum Betreiben eines Brennstoffzellensystems, das aufweist:
eine Brennstoffzuführeinheit (1), die ausgebildet ist, Kohlenwasserstoffbrennstoff bereitzustellen;
einen Brennstoffzellenstapel (6), der ausgebildet ist, durch eine elektrochemische Reaktion unter Anwendung von Luft und einem Wasserstoff enthaltenden Gas, das aus dem Kohlenwasserstoffbrennstoff erzeugt wird, Leistung zu erzeugen; und
einen Temperatursensor (7), der ausgebildet ist, eine Temperatur des Brennstoffzellenstapels (6) zu erfassen,
wobei der Brennstoffzellenstapel (6) eine Membranelektrodenanordnung (6e) mit einer Elektrolytmembran (6a), durch die Protonen hindurchtreten können, einer Kathode (6b) auf einer ersten Seite der Elektrolytmembran (6a) und einer Anode (6c) mit Reformierfähigkeit auf einer zweiten Seite der Elektrolytmembran (6a) aufweist, wobei das Verfahren umfasst Festlegen einer oberen Grenze eines von dem Brennstoffzellenstapel (6) ausgegebenen Stroms und Halten des von dem Brennstoffzellenstapel (6) ausgegebenen Stroms an oder unter der oberen Grenze, wobei die obere Grenze eines von dem Brennstoffzellenstapel (6) ausgegebenen Stroms auf der Grundlage der Temperatur des Brennstoffzellenstapels (6) und der Durchflussrate des Kohlenwasserstoffbrennstoffs festgelegt wird.

## Revendications

1. Système de pile à combustible comprenant :
un fournisseur de combustible (1) configuré pour fournir un hydrocarbure ;
un empilement de piles à combustible (6) configuré pour générer de l'énergie via une réaction électrochimique en utilisant de l'air et un gaz contenant de l'hydrogène généré à partir de l'hydrocarbure ;
un capteur de température (7) configuré pour détecter une température de l'empilement de piles à combustibles (6) ; et
un contrôleur (10), dans lequel :
l'empilement de piles à combustible (6) présente un assemblage membrane-électrode (6e) incluant une membrane électrolytique (6a) à travers laquelle des protons peuvent transiter, une cathode (6b) sur un premier côté de la membrane électrolytique (6a), et une anode (6c) présentant une capacité de reconstitution sur un deuxième côté de la membrane électrolytique (6a) ; et
le contrôleur (10) est configuré pour définir une limite supérieure de sortie de courant depuis l'empilement de piles à combustible (6) et maintenir la sortie de courant depuis l'empilement de piles à combustible (6) à ou au-dessous de la limite supérieure,
la limite supérieure de sortie de courant depuis l'empilement de piles à combustible (6) est définie selon la température de l'empilement de piles à combustible (6) et un débit de l'hydrocarbure.

2. Le système de pile à combustible selon la revendication 1, dans lequel :
le capteur de température est un premier capteur de température (7) ;
le système de pile à combustible inclut en outre un passage d'effluent gazeux (13), un passage à travers lequel transite un effluent gazeux déchargé depuis l'anode (6c) ; et
un deuxième capteur de température (16) configuré pour détecter une température de l'effluent gazeux ; et
le contrôleur (10) est configuré pour définir la limite supérieure de sortie de courant depuis l'empilement de piles à combustible (6) selon soit la température de l'empilement de piles à combustible (6), soit la température de l'effluent gazeux, en retenant la plus faible, et le débit de l'hydrocarbure et maintenir la sortie de courant depuis l'empilement de piles à combustible (6) à ou au-dessous de la limite supérieure.

3. Le système de pile à combustible selon la revendication 1, comprenant en outre :
un capteur de pression (17) configuré pour détecter une pression d'un gaz d'anode, un gaz qui contient au moins un du combustible et du gaz contenant de l'hydrogène et est fourni à l'anode (6c), dans lequel
le contrôleur (10) est configuré pour définir la limite supérieure de sortie de courant depuis l'empilement de piles à combustible (6) selon la température de l'empilement de piles à combustible (6), le débit de l'hydrocarbure et la pression du gaz d'anode et maintenir la sortie de courant depuis l'empilement de piles à combustible (6) à ou au-dessous de la limite supérieure.

4. Le système de pile à combustible selon la revendication 3, dans lequel :
le capteur de température est un premier capteur de température (7) ;
le système de pile à combustible inclut en outre un passage d'effluent gazeux (13), un passage à travers lequel transite un effluent gazeux déchargé depuis l'anode (6c) ; et
un deuxième capteur de température (16) configuré pour détecter une température de l'effluent gazeux ; et
le contrôleur (10) est configuré pour définir la limite supérieure de sortie de courant depuis l'empilement de piles à combustible (6) selon soit la température de l'empilement de piles à combustible (6), soit la température de l'effluent gazeux, en retenant la plus faible, le débit de l'hydrocarbure, et la pression du gaz d'anode et maintenir la sortie de courant depuis l'empilement de piles à combustible (6) à ou au-dessous de la limite supérieure.

5. Le système de pile à combustible selon la revendication 1, comprenant en outre un reconstitueur (4) configuré pour reconstituer le combustible et générer le gaz contenant de l'hydrogène.

6. Le système de pile à combustible selon la revendication 1, dans lequel :
le système de pile à combustible est un qui fournit à une charge extérieure une alimentation en énergie à partir de l'empilement de piles à combustible (6) ; et
le contrôleur (10) est configuré pour augmenter le débit de l'hydrocarbure si le contrôleur (10) détermine que l'alimentation en énergie à partir de l'empilement de piles à combustible (6), qui repose sur des caractéristiques de fonctionnement prédéterminées de l'empilement de piles à combustible (6), ne parvient pas à satisfaire une exigence énergétique de la charge extérieure.

7. Le système de pile à combustible selon la revendication 1, comprenant en outre :
un fournisseur d'eau (2) configuré pour fournir de l'eau à l'empilement de piles à combustible (6) ; et
un évaporateur (3) configuré pour évaporer l'eau fournie depuis le fournisseur d'eau (2).

8. Le système de pile à combustible selon la revendication 7, dans lequel :
le système de pile à combustible est un qui fournit à une charge extérieure une alimentation en énergie à partir de l'empilement de piles à combustible (6) ; et
le contrôleur (10) est configuré pour augmenter au moins un du débit de l'hydrocarbure et d'une fourniture de l'eau si le contrôleur (10) détermine que l'alimentation en énergie à partir de l'empilement de piles à combustible (6), qui repose sur des caractéristiques de fonctionnement prédéterminées de l'empilement de piles à combustible (6), ne parvient pas à satisfaire une exigence énergétique de la charge extérieure.

9. Le système de pile à combustible selon la revendication 1, comprenant en outre un fournisseur de vapeur (9) configuré pour fournir de la vapeur à l'empilement de piles à combustible (6).

10. Le système de pile à combustible selon la revendication 9, dans lequel :
le système de pile à combustible est un qui fournit à une charge extérieure une alimentation en énergie à partir de l'empilement de piles à combustible (6) ; et
le contrôleur (10) est configuré pour augmenter au moins un du débit de l'hydrocarbure et d'une fourniture de la vapeur si le contrôleur (10) détermine que l'alimentation en énergie à partir de l'empilement de piles à combustible (6), qui repose sur des caractéristiques de fonctionnement prédéterminées de l'empilement de piles à combustible (6), ne parvient pas à satisfaire une exigence énergétique de la charge extérieure.

11. Le système de pile à combustible selon la revendication 1, comprenant en outre :
un fournisseur d'eau (2) configuré pour fournir de l'eau à l'empilement de piles à combustible (6) ;
un évaporateur (3) configuré pour évaporer l'eau fournie depuis le fournisseur d'eau (2) ; et
un reconstitueur (4) configuré pour reconstituer le combustible et la vapeur fournie à partir de l'évaporateur (3), et générer le gaz contenant de l'hydrogène,
dans lequel la limite supérieure de sortie de courant depuis l'empilement de piles à combustible (6) est définie selon la température de l'empilement de piles à combustible (6), le débit de l'hydrocarbure, et le débit de la vapeur.

12. Le système de pile à combustible selon la revendication 1, dans lequel l'hydrocarbure est un d'un gaz naturel et d'un gaz propane.

13. Procédé pour exploiter un système de pile à combustible qui inclut :
un fournisseur de combustible (1) configuré pour fournir un hydrocarbure ;
un empilement de piles à combustible (6) configuré pour générer de l'énergie via une réaction électrochimique en utilisant de l'air et un gaz contenant de l'hydrogène généré à partir de l'hydrocarbure ; et
un capteur de température (7) configuré pour détecter une température de l'empilement de piles à combustibles (6),
l'empilement de piles à combustible (6) présentant un assemblage membrane-électrode (6e) incluant une membrane électrolytique (6a) à travers laquelle des protons peuvent transiter, une cathode (6b) sur un premier côté de la membrane électrolytique (6a), et une anode (6c) présentant une capacité de reconstitution sur un deuxième côté de la membrane électrolytique (6a), le procédé comprenant
définition d'une limite supérieure de sortie de courant depuis l'empilement de piles à combustible (6) et maintien de la sortie de courant depuis l'empilement de piles à combustible (6) à ou au-dessous de la limite supérieure,
la limite supérieure de sortie de courant depuis l'empilement de piles à combustible (6) est définie selon la température de l'empilement de piles à combustible (6) et un débit de l'hydrocarbure.
